(19) Europäisches Patentamt
European Patent Office
Office européen des brevets

(11) **EP 4 706 830 A1**

(12) **EUROPEAN PATENT APPLICATION**

(43) Date of publication:
**11.03.2026  Bulletin 2026/11**

(21) Application number: **25199336.6**

(22) Date of filing: **01.09.2025**

(51) International Patent Classification (IPC):
**B02C 17/18** (2006.01)     **B02C 25/00** (2006.01)
**G06F 17/00** (2019.01)     **G05B 13/04** (2006.01)

(52) Cooperative Patent Classification (CPC):
**B02C 25/00; B02C 17/1805; G05B 13/0275;
G06F 17/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.09.2024  BR 102024018024**

(71) Applicants:
• **Vale S.A.**
  **22250-145 Rio de Janeiro - RJ (BR)**
• **Associação Instituto Technologico Vale - ITV**
  **22250-145 Rio de Janeiro - RJ (BR)**
• **Universidade Federal De Ouro Preto - UFOP**
  **35400-000 Ouro Preto - MG (BR)**

(72) Inventors:
• **De Souza, Daniel Luiz**
  **35900-135 Itabira, MG (BR)**
• **Dos Santos, Mário Sérgio**
  **35900-729 Itabira, MG (BR)**
• **Costa, Cássio Pascoal**
  **35900-739 Itabirito, MG (BR)**
• **Cota, Luciano Perdigão**
  **30575-130 Belo Horizonte, MG (BR)**
• **Freitas Souza, Marcone Jamilson**
  **35402-343 Ouro Preto, MG (BR)**

(74) Representative: **Grünecker Patent- und
Rechtsanwälte
PartG mbB
Leopoldstraße 4
80802 München (DE)**

(54) **METHOD AND SYSTEM FOR OPTIMIZING THE REPLACEMENT OF GRINDING MEDIA IN WET BALL MILLS, AND CONTROLLER-READABLE MEDIUM**

(57)     The present invention provides a method for optimizing the replacement of mill grinding media comprising the steps of: determining, through a fuzzy controller (10), a required power value of each mill ($M_1$, $M_2$, ..., $M_n$); estimating, by a means for estimating mill power (20), a power of each mill ($M_1$, $M_2$, ..., $M_n$) based on its operational data ($M_1$, $M_2$, ..., $M_n$); determining, through a means for determining grinding media replacement (30), grinding media replacement parameters for the mill ($M_1$, $M_2$, ..., $M_n$); and automating, through a means for automating grinding media replacement (40), the replacement of grinding media based on the grinding media replacement parameters for the mill ($M_1$, $M_2$, ..., $M_n$). The present invention also provides a controller-readable medium comprising instructions that, when executed by at least one processor, cause at least one processor to perform steps of a method for optimizing the replacement of grinding media in mills. The present invention further provides a system for optimizing grinding media replacement in mills, comprising a grinding media replacement device; at least one mill ($M_1$, $M_2$, ..., $M_n$) connectable to the grinding media replacement device (50); and a controller-readable medium.

FIG. 1

**Description**

TECHNICAL FIELD

The present invention relates to the field of control systems specially adapted for comminution. More specifically, the present invention concerns a method and a system for optimizing the replacement of grinding media in wet ball mills.

DESCRIPTION OF THE PRIOR ART

Comminution operations play a crucial role in mineral beneficiation processes and aim to achieve three main objectives, namely: adjusting particle size for subsequent processing stages, increasing particle surface area, and tailoring particle size for immediate marketing purposes.

The energy expended to fragment the material, as well as the mechanical effort involved in the process, has a significant impact on both operating and capital costs in crushing and grinding circuits. Therefore, optimizing energy efficiency in comminution operations can positively affect revenue and the overall demand for energy.

Due to the high costs and considerable energy consumption in grinding processes, there is an ongoing search for alternatives to reduce energy consumption per ton of ore processed. Autogenous (AG), semi-autogenous (SAG), and ball mills have been widely used for this purpose.

Several operational parameters influence the performance of such mills, among which the fill level is one of the most relevant. This parameter represents the volume of the load relative to the total available volume of the mill. It not only governs mill performance and energy consumption but also determines the particle size of the final product.

Thus, operating rotary mills within optimal fill-level ranges is essential for optimizing their energy consumption, as such parameters establish the maximum production capacity.

Methods and systems for optimizing operational parameters of mills are known in the prior art. Document WO2023242752 (A1) discloses a system and method for real-time optimization in mining circuits, aimed at reducing downtime, increasing operational accuracy, optimizing efficiency, and minimizing both energy consumption and grinding media losses. Using historical, real-time operational, and laboratory data, as well as specific models for grinding systems, the method disclosed in this document employs predictive models for feed rate, grinding media load, drive system, and material trajectory in the mill, with the objective of reducing variability in the final product size. Regarding grinding media replacement, wear prediction models, fill-level estimation, and replenishment recommendations are applied, based on data such as ball trajectory, mill power, equipment dimensions, physical characteristics of the grinding media, and discharge system. However, the method of this document does not employ predictive models to plan grinding media replacement in mills throughout a work shift.

Document CN112588424 (B) discloses a control method for a ball mill pulverization system based on a cloud-based intelligent model. This document aims to provide a control method using artificial intelligence and fuzzy control for equipment automation. The method involves a local controller and an intelligent model with an output conversion algorithm. The controller analyzes the system's output signal and adjusts the input accordingly. The system uses multiple outputs and a conversion algorithm to achieve the target output, including powder output. The local controller's adjustment amount is the system input, while the state detection signal is the output, with input vectors such as hot air, recirculated air, and coal supply, and output vectors such as outlet temperature, inlet negative pressure, pressure difference, and grinding machine load. The powder output is determined by the mentioned parameters using the output conversion algorithm. However, this document does not use a fuzzy controller with laboratory data and specific energy consumption to generate the ideal mill power setpoint within a planning window.

Document WO2007110466 (A1) discloses a method, apparatus, and computer program with which the quantity of balls among the ore material contained in a mill is estimated as a percentage by volume of the total mill volume. Preferably, the invention relates to semi-autogenous (SAG) mills. In this document, an extended Kalman filter is used to estimate the ball load by employing process measurements and process models. The document combines an accurate measurement of the mill fill level with another measurement that depends on the fill level and the ball load. By feeding this information into the Kalman filter algorithm, an accurate estimate of the ball load can be calculated. However, this document neither specifies the use of a fuzzy controller nor discloses a model for planning grinding media replacement during a work shift.

Although previous studies disclose some documents addressing the optimization of mill operation, none of them discloses a method that uses models to determine the power required by the mills and to determine the timing and appropriate quantity of grinding media to be replaced in each mill throughout a work shift.

Accordingly, there is a need for an optimization approach for mill operation through a method that estimates both the ideal and instantaneous power of the mills, with the aim of coordinating the sequence of grinding media replacement in such mills throughout a work shift.

OBJECTIVES OF THE INVENTION

The objective of the present invention is to provide a system implementing a method for optimizing the replacement of grinding media in wet ball mills. The method is capable of determining, through a fuzzy controller, the power required by the mills; estimating, through a model that uses operational data such as feed rate, solids percentage, and discharge flow rate, the power of the mills; and determining, through a metaheuristic algorithm, the timing and appropriate quantity of grinding media to be added to each mill.

Another objective of the present invention is to provide a memory storage medium comprising instructions executable by an industrial controller to implement a method for optimizing the replacement of grinding media in ball mills.

BRIEF SUMMARY OF THE INVENTION

The present invention discloses a method for optimizing the replacement of grinding media in wet ball mills, comprising the steps of: determining, through a fuzzy controller, a required power value of the mill; estimating, through a model for estimating mill power, a power value of the mill based on its operational data; determining, through a means for determining grinding media replacement, grinding media replacement parameters for the mill; and automating, through a means for automating grinding media replacement, the replacement of grinding media based on the grinding media replacement parameters for this mill.

The present invention also discloses a controller-readable medium comprising instructions that, when executed by at least one processor, cause at least one processor to perform steps of a method for optimizing the replacement of grinding media in ball mills.

The present invention further discloses a system for optimizing grinding media replacement in mills, comprising a grinding media replacement device; at least one mill connectable to the grinding media replacement device; and a controller-readable medium.

BRIEF DESCRIPTION OF THE FIGURES

The figures are briefly described as follows:

Figure 1 - Schematic view of a system for optimizing the replacement of grinding media in mills;

Figure 2 - Graph illustrating a curve correlating specific energy and the percentage retained on the +0.15 mm grinding mesh;

Figure 3 - Configuration of a fuzzy controller;

Figure 4 - Graph illustrating (a) the behavior of actual power and estimated power over time, and (b) the correlation between actual power and the estimated power model of the mills in the grinding stage; graph illustrating (c) the behavior of actual power and estimated power over time, and (d) the correlation between actual power and the estimated power model of the mills in the regrinding stage;

Figure 5 - Graph illustrating (a) the correlation between the mill fill level and motor power, and (b) the correlation between the fill level and load weight;

Figure 6 - Graph illustrating the behavior of mill power with feed and without feed.

DETAILED DESCRIPTION OF THE INVENTION

The description set forth below is directed to a preferred embodiment of the invention, applied to a method and system for optimizing the replacement of grinding media in ball mills, as well as to a controller-readable medium.

The present invention provides a method for optimizing the replacement of mill grinding bodies comprising the steps of: determining, through a fuzzy controller, a required power value of the mill; estimating, by a means for estimating mill power, a power of the mill based on its operational data; determining, through a means for determining grinding media replacement, grinding media replacement parameters for the mill; and automating, through a means for automating grinding media replacement, the replacement of grinding media based on the grinding media replacement parameters for the mill.

The present invention also provides a controller-readable medium comprising instructions that, when executed by at least one processor, cause at least one processor to perform steps of a method for optimizing grinding media replacement in mills, comprising: determining, through a fuzzy controller, a required power value of the mill; estimating, by a means for estimating mill power, a power of the mill based on its operational data; determining, through a means for determining grinding media replacement, grinding media replacement parameters for the mill; and automating, through a means for automating grinding media replacement, the replacement of grinding media based on the grinding media replacement parameters for the mill.

The present invention further provides a system for optimizing grinding media replacement in mills, comprising: a grinding media replacement device; at least one mill connectable to the grinding media replacement device; and a controller-readable medium comprising instructions that, when executed by at least one processor, cause at least one processor to perform steps of a method for optimizing grinding media replacement in mills, comprising: determining, through a fuzzy controller, a required power value of the mill; estimating, by a means for estimating mill power, a power of the mill based on its operational data; determining, through a means for determining grinding media replacement, grinding media replacement parameters for the mill; and automating, through a means for automating grinding media replacement, the replacement of grinding media based on the grinding media replacement parameters for the mill; wherein the means for automating grinding media replacement is further configured to control the grinding media replacement device.

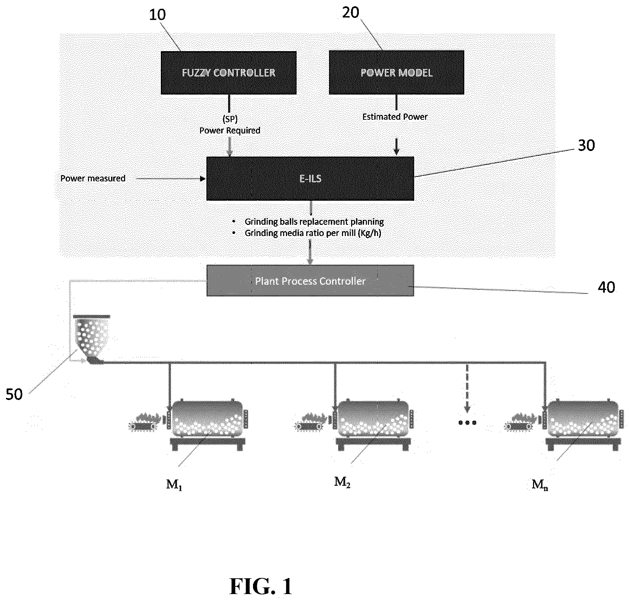

Figure 1 illustrates a system for optimizing the replacement of grinding media in mills. The system comprises a grinding media replacement device (50) and at least one mill ($M_1$, $M_2$, ..., $M_n$) coupleable to the grinding media replacement device (50). The system also comprises a controller-readable medium comprising instructions that, when executed by at least one processor, cause at least one processor to perform steps of a method for optimizing grinding media replacement in mills, comprising: determining, through a fuzzy controller (10), a required power value of the mill ($M_1$, $M_2$, ..., $M_n$); estimating, by means for estimating mill power (20), a power of the mill ($M_1$, $M_2$, ..., $M_n$) based on its operational data ($M_1$, $M_2$, ..., $M_n$); determining, through a means for determining grinding media replacement (30), grinding media replacement parameters for the mill; and automating, through a means for automating grinding media replacement, the replacement of grinding media based on the grinding media replacement parameters for the mill ($M_1$, $M_2$, ..., $M_n$); and automating, through a means (40) for automating grinding media replacement, the replacement of grinding media based on the grinding media replacement parameters for the mill ($M_1$, $M_2$, ..., $M_n$).

In this embodiment, the medium for automating the replacement of grinding media (40) is further configured to control the grinding media replacement device (50).

Preferably, the step of determining a required power value of the mill ($M_1$, $M_2$, ..., $M_n$) comprises implementing a model for predicting the energy consumption of this mill ($M_1$, $M_2$, ..., $M_n$).

More preferably, the energy consumption prediction model is based on the method developed by Donda, J., Galinari, C., Rabelo, P., in "O controle da eficiência energética nos circuitos de pré-moagem e moagem primária da Samarco Mineraç ão", published in the II Simpósio Brasileiro de Minério de Ferro - ABM, Ouro Preto, pp. 144-150, 1999, which aims to estimate the specific energy consumption in both primary grinding and regrinding.

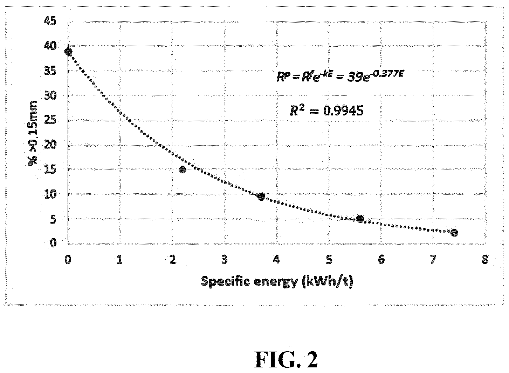

This approach involves performing grinding over different time intervals, which are subsequently converted into specific energy consumption values, as illustrated in Figure 2. For this conversion, the model considers parameters such as mill diameter, filling degree, and fraction of critical speed.

In this embodiment, the energy consumption prediction model for the mill ($M_1$, $M_2$, ..., $M_n$) comprises Equation (1):

$$E = \frac{1}{K} \ln \left( \frac{R^f}{R^p} \right) \qquad (1)$$

where:

$E$ is the energy consumed, at a pinion shaft, per unit of mass fed into the circuit (kWh/t);
$R^f$ is the percentage of material retained, at the desired diameter, in the feed control mesh;
$R^p$ is the percentage of material retained, at the desired diameter, in the product control mesh; and
$K$ is an ore characteristic parameter (t/kWh).

Based on the data shown in Figure 2, to comminute the retained material in the 0.15 mm range from 39% to 5%, a specific energy consumption $E$ of 5.44 kWh/t would be required, considering the parameter values K = 0.377, Rf = 39%, and with a correlation index of R2 = 0.9945.

In this embodiment, the fuzzy controller (10) is employed in conjunction with the energy consumption prediction model of the mill ($M_1$, $M_2$, ..., $M_n$). The method uses the current grinding energy consumption values and the percentage of the grinding product to anticipate whether it is necessary to adjust the power of the mill ($M_1$, $M_2$, ..., $M_n$). Preferably, the energy consumption prediction model for the mill ($M_1$, $M_2$, ..., $M_n$) is developed based on its historical operational data.

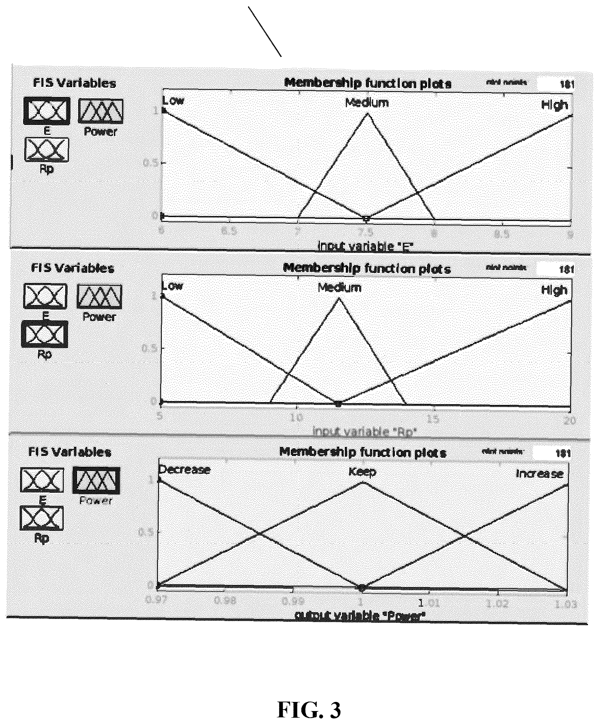

Figure 3 illustrates a configuration of the fuzzy controller (10). More preferably, the method includes modeling $E$ and $R^p$ as fuzzy variables used by the fuzzy controller (10) to determine the optimal power settings for the mills ($M_1$, $M_2$, ..., $M_n$).

In this embodiment, the step of estimating the power of the mill ($M_1$, $M_2$, ..., $M_n$) comprises implementing a model to empirically estimate the power of the mill ($M_1$, $M_2$, ..., $M_n$) over time.

Preferably, in order to investigate the relationship between power decay and increase in the mills, average values of the feed rate, operating time of each mill ($M_1$, $M_2$, ..., $M_n$), grinding media replacement, motor power, solids percentage, mass flow rate of the pump from the mill discharge sump, and mass flow rate of the cyclone feed pump, obtained from an operational database, can be used.

More preferably, the model for estimating the power decay of at least one mill ($M_1$, $M_2$, ..., $M_n$) during the grinding stage over time comprises Equation (2), which can be obtained through regression between variables:

$$P_{ij}^d = -0.000349694 Q_{ij}^p + 0.003100983 \alpha_{ij} + 0.002574587 \phi_{ij}, \qquad (2)$$

where:

$H$ = planning horizon discretized in hours, $H = \{1, 2, \cdots, |H|\}$;
$P^d_{ij}$ is the power decay in kW in mill $j$ ($M_1$, $M_2$, ..., $M_n$) at instant $i \in H$;
$Q^p_{ij}$ is the mass flow rate in t/h of output in the pump belonging to mill $j$ at instant $i$;
$\alpha_{ij}$ is the feed rate in t/h in mill $j$ ($M_1$, $M_2$, ..., $M_n$) at instant $i$;
$\phi_{ij}$ is the percentage of solids (%) in mill $j$ ($M_1$, $M_2$, ..., $M_n$) at instant $i$.

Additionally, the model for estimating the power increase of the mill ($M_1$, $M_2$, ..., $M_n$) during the grinding stage over time additionally comprises Equation (3), obtained through regression analyses and which describes a correlation between the power increase and the other mill variables:

$$p_{ij}^r = (-0.000054831 Q_{ij}^p + 0.0000139794 \alpha_{ij} + 0.0000756954 \phi_{ij}) x_{ij}, \qquad (3)$$

where:

$p^r_{ij}$ is the power increase, in kW, due to the replacement of grinding media in mill $j$ ($M_1$, $M_2$, ..., $M_n$) at instant i;
$x_{ij}$ is the ball load in kg in mill $j$ ($M_1$, $M_2$, ..., Mn) at instant $i$.

More preferably, the model for estimating the power decay of the mill ($M_1$, $M_2$, ..., $M_n$) during the regrinding stage over time comprises Equation (4), which can be obtained through regression between variables:

$$P_{ij}^d = -0{,}003588001 Q_{ij}^h + 0{,}004761532 Q_{ij}^p, \qquad (4)$$

where:
$Q^h_{ij}$ = mass flow rate of feed to the hydrocyclone belonging to mill $j$ ($M_1$, $M_2$, ..., $M_n$) at instant $i \in H$ in t/h.

Additionally, the model for estimating the power increase of the mill ($M_1$, $M_2$, ..., $M_n$) during the regrinding stage over time additionally comprises Equation (5), obtained through regression analyses and which describes a correlation between the power increase and the other mill variables:

$$p_{ij}^r = (0.00000130235 Q_{ij}^h + 0.00000651034 Q_{ij}^p) x_{ij}. \qquad (5)$$

Additionally, the model for estimating the power of the mill ($M_1$, $M_2$, ..., $M_n$) during the grinding and regrinding stages over time additionally comprises Equation (6):

$$p_{ij}^e = p_{[i-1]j}^e + (p_{ij}^r - P_{ij}^d) \ \forall i \geq 1, \qquad (6)$$

where:

$p_{ij}^e$ is the estimated power in mill $j$ ($M_1$, $M_2$, ..., $M_n$) at instant $i$ in kW;

$p_{0j}^e$ is the average power in the last 15 minutes in kW in mill $j$ ($M_1$, $M_2$, ..., $M_n$).

Equation (4) estimates the power in the mill ($M_1$, $M_2$, ..., $M_n$) over time, providing an estimate based on the analysis of relevant variables and serving as a reference point for understanding variations in the power of mill ($M_1$, $M_2$, ..., $M_n$) at various times.

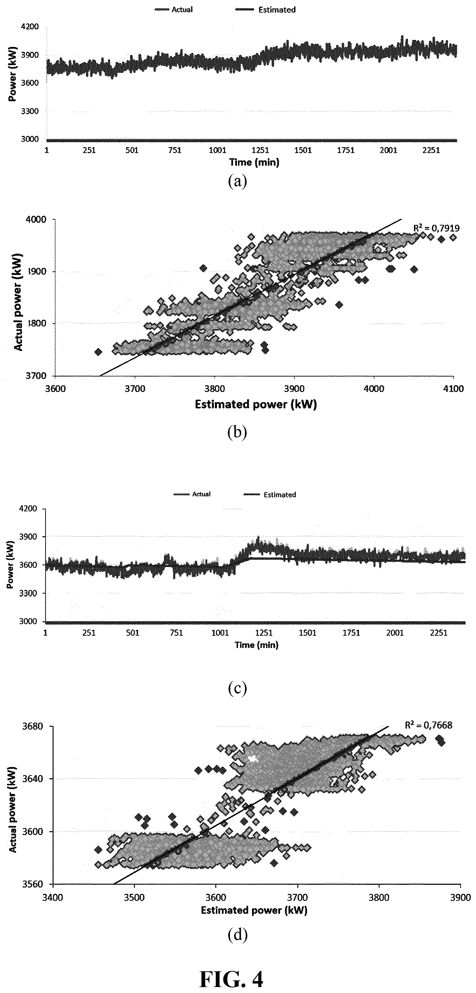

To assess the effectiveness of the model in estimating the power of the mill ($M_1$, $M_2$, ..., $M_n$) during the grinding stage over time, operational measurement data from the mill $M_1$ were compared with the values predicted by the model, as illustrated in Figures 4(a) and 4(b).

The model showed an accuracy of 79%, indicating that its power estimates are consistent with the actual measured values, evidencing the model's ability to predict mill power over time and provide relevant information for process control.

To assess the effectiveness of the model in estimating the power of the mill ($M_1$, $M_2$, ..., $M_n$) during the grinding stage over time, operational measurement data from the mill $M_4$ were compared with the values predicted by the model, as illustrated in Figures 4(c) and 4(d).

The model showed an accuracy of 76%, indicating that its power estimates are consistent with the actual measured values, evidencing the model's ability to predict mill power over time and provide relevant information for process control.

In this embodiment, the step of estimating the power of the mill ($M_1$, $M_2$, ..., $M_n$) comprises implementing a model to establish a correlation between the power of the mill ($M_1$, $M_2$, ..., $M_n$) and its filling degree.

Preferably, the model to establish a correlation between the power of the mill ($M_1$, $M_2$, ..., $M_n$) and its filling degree comprises Equation (7):

$$x_{ij} = 0{,}785 \, D_j^2 \, L_j \, \rho \, e_{ij}, \qquad (7)$$

where:

$x_{ij}$ is the grinding media load in mill $j$ ($M_1$, $M_2$, ..., $M_n$) at instant $i$, in kg;
$D_j$ is the diameter of mill $j$ ($M_1$, $M_2$, ..., $M_n$), measured inside the liner, in meters;
$L_j$ is the length of mill $j$ ($M_1$, $M_2$, ..., $M_n$), in meters;
$\rho_j$ is the bulk density of the load in mill $j$ ($M_1$, $M_2$, ..., $M_n$), in kg/m$^3$;
$e_{ij}$ is the filling degree of mill $j$ ($M_1$, $M_2$, ..., $M_n$) at instant $i$.

The model for establishing a correlation between the power of the mill ($M_1$, $M_2$, ..., $M_n$) and its filling degree further comprises Equation (8), for estimating the power per ton of balls for mills with a diameter greater than 2.44 m:

$$p_{ij}^b = 4{,}879 \, D_j^{0,3} \, (3{,}2 - 3e_{ij}) \, V_j \left( 1 - \frac{0{,}1}{2^{(9-10V_j)}} \right) + S_j, \qquad (8)$$

where:

$p^b_{ij}$ is the power per ton of balls, at the pinion of mill $j$ ($M_1$, $M_2$, ..., $M_n$) at instant $i$, in kW/t;
$D_j$ is the diameter of mill $j$ ($M_1$, $M_2$, ..., $M_n$), measured inside the liner, in meters;
$e_{ij}$ is the filling degree of mill $j$ ($M_1$, $M_2$, ..., $M_n$) at instant $i$ in %;
$V_j$ is the fraction of the critical speed of mill $j$ ($M_1$, $M_2$, ..., $M_n$) in %;
$S_j$ is the correction factor for the ball size of mill $j$ ($M_1$, $M_2$, ..., $M_n$).

The model for establishing the power correction factor of the mill ($M_1$, $M_2$, ..., $M_n$) further comprises Equation (9), for mills with a diameter greater than 3.3 m:

$$S_j = 1{,}102 \, \frac{B_j - 12{,}5 \, D_j}{50{,}8}, \qquad (9)$$

where:

$B_j$ is the diameter of the largest ball used (top size), in millimeters, in mill $j$ ($M_1$, $M_2$, ..., $M_n$);
$S_j$ is a parameter that must be considered only when the ball diameter is smaller than 1/80 of the diameter of at least one mill $j$ ($M_1$, $M_2$, ..., $M_n$).

The model for establishing a correlation between the power of the mill ($M_1$, $M_2$, $M_n$) and its filling degree further comprises Equation (10), for estimating the power at the pinion of the mill ($M_1$, $M_2$, ..., $M_n$):

$$p_{ij}^p = 1000 p_{ij}^b x_{ij}, \tag{10}$$

where:

$p^p_{ij}$ is the power at the pinion, in kW, in mill $j$ ($M_1$, $M_2$, ..., $M_n$) at instant $i$.

Additionally, the model for establishing a correlation between the power of the mill ($M_1$, $M_2$, ..., $M_n$) and its filling degree further comprises Equation (11), for estimating the mechanical power at the motor shaft, which is the ratio between the power at the pinion and the gear efficiency:

$$p_{ij}^m = \frac{p_{ij}^p}{\eta}, \tag{11}$$

where:

$p^m_{ij}$ is the mechanical power at the motor shaft of mill $j$ ($M_1$, $M_2$, ..., Mn) at instant $i$, in kW;
$\eta$ is the gear efficiency.

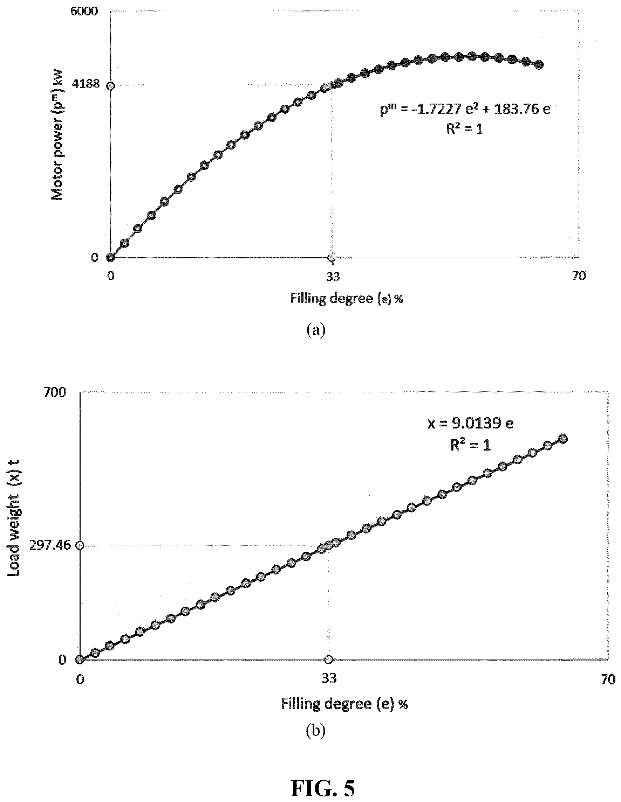

Equations (7) to (11) allow estimating the filling degree $e_{ij}$ in relation to the mechanical power at the motor shaft $p^m_{ij}$, as illustrated in Figures 5(a) and 5(b), providing information on the amount of grinding media in the mill ($M_1$, $M_2$, ..., $M_n$).

Based on the results obtained in the regression illustrated in Figure 5(a), it is possible to establish a correlation between the power of the mill ($M_1$, $M_2$, ..., $M_n$) in the grinding stage and its filling degree, further comprising Equation (12):

$$-1{,}7227 e_{ij}^2 + 183{,}76 e_{ij} - p_{ij}^m = 0. \tag{12}$$

Additionally, based on the results obtained from the regression, it is possible to establish a correlation between the power of the mill ($M_1$, $M_2$, ..., $M_n$) in the regrinding stage and its filling degree, comprising Equation (13):

$$-1{,}7227 e_{ij}^2 + 180{,}38 e_{ij} - p_{ij}^m = 0. \tag{13}$$

The model for establishing a correlation between the power of the mill ($M_1$, $M_2$, ..., $M_n$) and its filling degree further comprises Equation (14):

$$e = \frac{-b + \sqrt{b^2 - 4ac}}{2a} \tag{14}$$

where:

$a$ = -1,7227;
$b$ = 183.76 for mills in the grinding stage and 180.38 for mills in the regrinding stage;

$$c = -p^m_{ij.}$$

Preferably, the model for establishing a correlation between the power of the mill ($M_1$, $M_2$, ..., $M_n$) and its filling degree further comprises Equation (15) to estimate the load weight in the mill ($M_1$, $M_2$, ..., $M_n$):

$$x_{ij} = 9{,}0139 e_{ij}. \tag{15}$$

In this embodiment, considering a mechanical power of 4,188 kW, it can be inferred, based on the data in Figure 5(a), a filling degree of 33% for mills in the grinding stage and 34.8% for mills in the regrinding stage. Moreover, as represented in Figure 5(b), the load weight inside the mill is estimated to be 297.46 t for mills in the grinding stage and 313.69 t for mills in the regrinding stage.

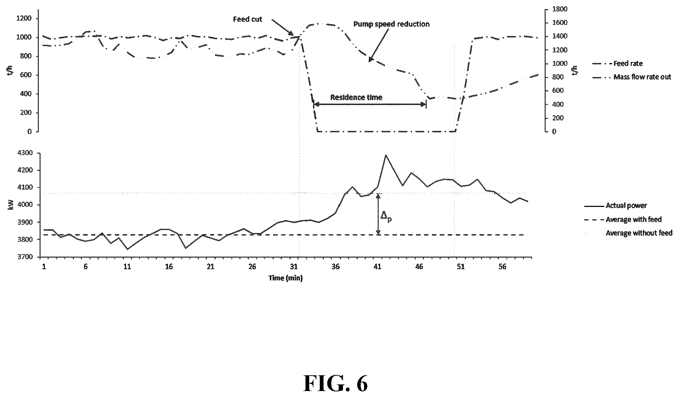

Equation (11) describes the power at the pinion shaft when the mill is loaded only with grinding media. Figure 6 illustrates the difference in power of the mill ($M_1$, $M_2$, ..., $M_n$) in situations with and without material feed (ore and water) along with grinding media. When material feed is interrupted, the increase in the mill's internal void volume facilitates the movement of the grinding media load, resulting in an increase in the mill's rotational speed and consequently an increase in energy consumption.

Additionally, the imbalance in the grinding media load also contributes to an increase in the force and energy of motion, impacting the energy consumption of the mill ($M_1$, $M_2$, ..., $M_n$).

Preferably, the model for establishing a correlation between the power of the mill ($M_1$, $M_2$, ..., $M_n$) and its filling degree further comprises Equation (16) to determine the net power of the mill ($M_1$, $M_2$, ..., $M_n$) with grinding media:

$$p_{ij}^l = p_{ij}^m + \Delta P. \qquad (16)$$

where:

$p_{ij}^l$ is the net power in mill $j$ ($M_1$, $M_2$, ..., $M_n$) at instant $i$; and
$\Delta P$ is the difference between the net power and the mechanical power at the motor shaft of each mill $j$ ($M_1$, $M_2$, ..., $M_n$).

In this embodiment, the step of determining grinding media replacement parameters for the mill ($M_1$, $M_2$, ..., $M_n$) comprises implementing a metaheuristic optimization model that includes an objective function to minimize the sum of the difference between the required power of each mill ($M_1$, $M_2$, ..., $M_n$) and its estimated power ($M_1$, $M_2$, ..., $M_n$). Preferably, the optimization model uses a Mixed-Integer Linear Programming (MILP) to represent the problem; a local search-based metaheuristic optimization algorithm; and includes an Enhanced Iterated Local Search (ILS) algorithm whose objective function is described by Equation (17) below:

$$f(s) = \sum_{i=1}^{|I|} \sum_{j=1}^{|J|} |P_j^w - p_{ij}^e|. \qquad (17)$$

Additionally, the step of determining grinding media replacement parameters for the mill ($M_1$, $M_2$, ..., $M_n$) comprises defining a grinding media replacement sequence for the mill ($M_1$, $M_2$, ..., $M_n$) and defining a grinding media rate for the mill ($M_1$, $M_2$, ..., $M_n$).

The present invention is advantageous in that the optimization of grinding media replacement in mills by the proposed method ensures greater energy efficiency and improved particle size control in the process, since the method maintains the filling degree of each mill ($M_1$, $M_2$, ..., $M_n$) at its optimal operational value, thereby avoiding both undergrinding and overgrinding of the ore.

Another advantage of the present invention is that maintaining the optimal filling point of each mill ($M_1$, $M_2$, ..., $M_n$) provided by this invention not only increases the efficiency of ore comminution but also yields favorable results in subsequent processes, such as flotation.

By providing a heuristic-based method that addresses the measurement of the material grinding percentage to dynamically infer the ideal mill power value and uses an estimate of the mills' instantaneous power based on operational data such as feed rate and solids percentage, among others, the present invention assists in decision-making regarding when and how many grinding media should be added to each mill ($M_1$, $M_2$, ..., $M_n$).

Thus, the present invention enables proper and more efficient planning of grinding media replacement throughout a work shift.

**Claims**

1. A method for optimizing the replacement of grinding media in mills, **<u>characterized</u> by** comprising the steps of:

    determining, through a fuzzy controller (10), a required power value of each mill ($M_1$, $M_2$, ..., $M_n$);
    estimating, through a means for estimating mill power (20), a power of each mill ($M_1$, $M_2$, ..., $M_n$) based on its operational data;
    determining, through a means for determining grinding media replacement (30), grinding media replacement parameters for each mill ($M_1$, $M_2$, ..., $M_n$); and
automating, through a means for automating grinding media replacement (40), the replacement of grinding media based on the grinding media replacement parameters for each mill ($M_1$, $M_2$, ..., $M_n$).

2. Method according to Claim 1, **<u>characterized</u> in that** the step of automating grinding media replacement further comprises controlling, through the means for automating grinding media replacement (40), a grinding media replacement device (50).

3. Method according to Claim 1 or 2, **<u>characterized</u> in that** the step of determining a required power value for each mill ($M_1$, $M_2$, ..., $M_n$) comprises implementing an energy consumption prediction model for this mill ($M_1$, $M_2$, ..., $M_n$).

4. Method according to Claim 3, **<u>characterized</u> in that** the energy consumption prediction model for each mill ($M_1$, $M_2$, ..., $M_n$) comprises Equation (1):

$$E = \frac{1}{K} \ln \left( \frac{R^f}{R^p} \right) \qquad (1)$$

where:

$E$ is the energy consumed, at a pinion shaft, per unit of mass fed into the circuit (kWh/t);
$R^f$ is the percentage of material retained, at the desired diameter, in the feed control mesh;
$R^p$ is the percentage of material retained, at the desired diameter, in the product control mesh; and
$K$ is an ore characteristic parameter (t/kWh).

5. Method, according to any one of Claims 1 to 4, **<u>characterized</u> in that** the step of estimating the power of each mill ($M_1$, $M_2$, ..., $M_n$) comprises implementing a model to estimate the power of this mill ($M_1$, $M_2$, ..., $M_n$) over time.

6. Method, according to Claim 5, **<u>characterized</u> in that** the model to estimate the power of each mill ($M_1$, $M_2$, ..., $M_n$) in the grinding stage over time comprises Equation (2):

$$P_{ij}^d = -0.000349694 Q_{ij}^p + 0.003100983 \alpha_{ij} + 0.002574587 \phi_{ij}, \qquad (2)$$

where:

$P^d_{ij}$ is the power decay in kW in mill $j$ ($M_1$, $M_2$, ..., $M_n$) at instant $i$;
$Q^p_{ij}$ is the mass flow rate of the output in t/h at mill $j$ ($M_1$, $M_2$, $M_n$) at instant $i$;
$\alpha_{ij}$ is the feed rate in t/h in mill $j$ ($M_1$, $M_2$, $M_n$) at instant $i$;
$\phi_{ij}$ is the percentage of solids in mill $j$ ($M_1$, $M_2$, ..., $M_n$) at instant $i$;
wherein the model to estimate the power of the mill ($M_1$, $M_2$, ..., $M_n$) in the grinding stage over time further comprises Equation (3):

$$p_{ij}^r = (-0.000054831 Q_{ij}^p + 0.0000139794 \alpha_{ij} + 0.0000756954 \phi_{ij}) x_{ij}, \qquad (3)$$

where:

$p^r_{ij}$ is the power increase, in kW, due to the replacement of grinding media in mill $j$ ($M_1$, $M_2$, ..., $M_n$) at instant $i$;
$x_{ij}$ is the ball charge in kg in mill $j$ ($M_1$, $M_2$, ..., $M_n$) at instant $i$.

7. Method, according to Claim 5, **<u>characterized</u> in that** the model to estimate the power of the mill ($M_1$, $M_2$, ..., $M_n$) in the regrinding stage over time comprises Equation (4):

$$P_{ij}^d = -0{,}003588001 Q_{ij}^h + 0{,}004761532 Q_{ij}^p, \qquad (4)$$

where:

$Q^h_{ij}$ = mass flow rate of feed to the hydrocyclone belonging to mill $j$ ($M_1$, $M_2$, ..., $M_n$) at instant $i$ in t/h.
wherein the method to estimate the power of the mill ($M_1$, $M_2$, ..., $M_n$) in the regrinding stage over time further comprises Equation (5):

$$p^r_{ij} = (0.00000130235Q^h_{ij} + 0.00000651034Q^p_{ij})x_{ij}. \qquad (5)$$

wherein the model to estimate the power of the mill ($M_1$, $M_2$, ..., $M_n$) over time further comprises Equation (6):

$$p^e_{ij} = p^e_{[i-1]j} + (p^r_{ij} - P^d_{ij}) \; \forall i \geq 1, \qquad (6)$$

where:

$p^e_{ij}$ is the estimated power of mill $j$ ($M_1$, $M_2$, ..., $M_n$) at instant $i$ in kW;

$P^e_{0j}$ is the average power in the last 15 minutes in mill $j$ ($M_1$, $M_2$, ..., $M_n$) in kW.

8. Method according to any one of Claims 1 to 6, <u>**characterized in that**</u> the step of estimating the power of the mill ($M_1$, $M_2$, ..., $M_n$) comprises implementing a model to establish a correlation between the power of each mill ($M_1$, $M_2$, $M_n$) and its filling degree.

9. Method, according to Claim 7, <u>**characterized in that**</u> the model to establish a correlation between the power of the mill ($M_1$, $M_2$, ..., $M_n$) and its filling degree comprises Equation (7):

$$x_{ij} = 0{,}785 \, D^2_j \, L_j \, \rho \, e_{ij}, \qquad (7)$$

where:

$x_{ij}$ is the grinding media load in mill $j$ ($M_1$, $M_2$, ..., $M_n$) at instant $i$, in kg;
$D_j$ is the diameter of mill $j$ ($M_1$, $M_2$, ..., $M_n$), measured inside the liner, in meters;
$L_j$ is the length of mill $j$ ($M_1$, $M_2$, ..., $M_n$), in meters;
$\rho_j$ is the bulk density of the load in mill $j$ ($M_1$, $M_2$, ..., $M_n$), in kg/m$^3$;
$e_{ij}$ is the filling degree of mill $j$ ($M_1$, $M_2$, ..., $M_n$) at instant $i$;
wherein the model for establishing a correlation between the power of the mill ($M_1$, $M_2$, $M_n$) and its filling degree further comprises Equation (8), for estimating the power per ton of balls for mills with a diameter greater than 2.44 m:

$$p^b_{ij} = 4{,}879 \, D^{0,3}_j \, (3{,}2 - 3e_{ij}) \, V_j \left( 1 - \frac{0{,}1}{2^{(9-10V_j)}} \right) + S_j, \qquad (8)$$

where:

$p^b_{ij}$ is the power per ton of balls, at the pinion of mill $j$ ($M_1$, $M_2$, ..., $M_n$) at instant $i$, in kW/t;
$D_j$ is the diameter of mill $j$ ($M_1$, $M_2$, $M_n$), measured inside the liner, in meters;
$e_{ij}$ is the filling degree of mill $j$ ($M_1$, $M_2$, ..., $M_n$) at instant $i$ in %;
$V_j$ is the fraction of the critical speed of mill $j$ ($M_1$, $M_2$, ..., $M_n$) in %;
$S_j$ is the correction factor for the ball size of mill $j$ ($M_1$, $M_2$, ..., $M_n$);
wherein the model to establish a correlation between the power of the mill ($M_1$, $M_2$, $M_n$) and its filling degree additionally comprises Equation (9), for mills with a diameter greater than 3.3 m:

$$S_j = 1{,}102\,\frac{B_j - 12{,}5\,D_j}{50{,}8}, \tag{9}$$

where:

$B_j$ is the diameter of the largest ball used (top size) in mill $j$ ($M_1$, $M_2$, ..., $M_n$), in millimeters;
$S_j$ is a parameter that must be considered only when the ball diameter is smaller than 1/80 of the diameter of at least one mill $j$ ($M_1$, $M_2$, ..., $M_n$);
wherein the model for establishing a correlation between the power of the mill ($M_1$, $M_2$, ..., $M_n$) and its filling degree further comprises Equation (10), for estimating the power at the pinion of the mill ($M_1$, $M_2$, ..., $M_n$):

$$p_{ij}^{p} = 1000 p_{ij}^{b} x_{ij}, \tag{10}$$

where:

$p^p{}_{ij}$ is the power at the pinion of the mill $j$ ($M_1$, $M_2$, ..., $M_n$) at instant $i$, in kW;
wherein the model for establishing a correlation between the power of the mill ($M_1$, $M_2$, ..., $M_n$) and its filling degree further comprises Equation (16), for estimating the mechanical power at the motor shaft, which is the ratio between the power at the pinion and the gear efficiency:

$$p_{ij}^{m} = \frac{p_{ij}^{p}}{\eta}, \tag{16}$$

where:

$p^m{}_{ij}$ is the mechanical power at the motor shaft of mill $j$ ($M_1$, $M_2$, ..., $M_n$) at instant $i$, in kW;
$\eta$ is the gear efficiency;
wherein the model to establish a correlation between the power of the mill ($M_1$, $M_2$, $M_n$) in the grinding stage and its filling degree additionally comprises Equation (12):

$$-1{,}7227 e_{ij}^{2} + 183{,}76 e_{ij} - p_{ij}^{m} = 0. \tag{12}$$

wherein the model to establish a correlation between the power of the mill ($M_1$, $M_2$, ..., $M_n$) in the regrinding stage and its filling degree additionally comprises Equation (13):

$$-1{,}7227 e_{ij}^{2} + 180{,}38 e_{ij} - p_{ij}^{m} = 0. \tag{13}$$

wherein the model for establishing a correlation between the power of the mill $M_1$, $M_2$, ..., $M_n$ and its filling degree further comprises Equation (14):

$$e = \frac{-b + \sqrt{b^2 - 4ac}}{2a} \tag{14}$$

where:

$a$ = -1,7227;
$b$ = 183.76 for the mills in the grinding stage and 180.38 for the mills in the regrinding stage;

$$c = -p^m{}_{ij}$$

wherein the model for establishing a correlation between the power of the mill ($M_1$, $M_2$, ..., $M_n$) and its filling degree further comprises Equation (15) to estimate the load weight in this mill ($M_1$, $M_2$, ..., $M_n$):

$$x_{ij} = 9{,}0139 e_{ij}. \hspace{3cm} (15)$$

wherein the model for establishing a correlation between the power of the mill ($M_1$, $M_2$, ..., $M_n$) and its filling degree further comprises Equation (16) to determine the net power of this mill ($M_1$, $M_2$, ..., $M_n$) with grinding media:

$$p_{ij}^l = p_{ij}^m + \Delta P. \hspace{3cm} (16)$$

where:

$p_{ij}^l$ is the net power in mill $j$ ($M_1$, $M_2$, ..., $M_n$) at instant $i$; and
$\Delta P$ is the difference between the net power and the mechanical power at the motor shaft of this mill ($M_1$, $M_2$, ..., $M_n$).

10. Method according to any one of Claims 1 to 8, **characterized** **in that** the step of determining grinding media replacement parameters for the mill ($M_1$, $M_2$, ..., $M_n$) comprises implementing a metaheuristic optimization model that includes an objective function to minimize the sum of the difference between the required power of each mill ($M_1$, $M_2$, ..., $M_n$) and its estimated power ($M_1$, $M_2$, ..., $M_n$).

11. Method, according to Claim 9, **characterized** **in that** the metaheuristic optimization model is of the local search type and includes an Enhanced ILS algorithm.

12. Method, according to Claim 9 or 10, **characterized** **in that** the step of determining grinding media replacement parameters for the mill ($M_1$, $M_2$, ..., $M_n$) comprises defining a grinding media replacement sequence for this mill ($M_1$, $M_2$, ..., $M_n$) and defining a grinding media rate for this mill ($M_1$, $M_2$, ..., $M_n$).

13. Controller-readable medium, **characterized in that** it comprises instructions which, when executed by at least one processor, cause at least one processor to perform steps of a method for optimizing the replacement of grinding media in mills as defined in any one of Claims 1 to 11, comprising:

determining, through a fuzzy controller (10), a required power value of the mill ($M_1$, $M_2$, ..., $M_n$);
estimating, through a means for estimating mill power (20), a power of the mill ($M_1$, $M_2$, ..., $M_n$) based on its operational data ($M_1$, $M_2$, ..., $M_n$);
determining, through a means for determining grinding media replacement (30), grinding media replacement parameters for the mill ($M_1$, $M_2$, ..., $M_n$); and
automating, through a means for automating grinding media replacement (40), the replacement of grinding media based on the grinding media replacement parameters for the mill ($M_1$, $M_2$, ..., $M_n$).

14. A system for optimizing the replacement of grinding media in mills, **characterized** **by** comprising:

a grinding media replacement device (50);
at least one mill ($M_1$, $M_2$, ..., $M_n$) connectable to the grinding media replacement device (50); and
a controller-readable medium, as defined in Claim 12, comprising instructions that, when executed by at least one processor, cause the at least one processor to perform steps of a method for optimizing the replacement of grinding media in mills, comprising:

determining, through a fuzzy controller (10), a required power value of the mill ($M_1$, $M_2$, ..., $M_n$);
estimating, through a means for estimating mill power (20), a power of the mill ($M_1$, $M_2$, ..., $M_n$) based on its operational data ($M_1$, $M_2$, $M_n$);
determining, through a means for determining grinding media replacement (30), grinding media replacement parameters for the mill ($M_1$, $M_2$, ..., $M_n$); and
automating, through a means for automating grinding media replacement (40), the replacement of grinding media based on the grinding media replacement parameters for the mill ($M_1$, $M_2$, ..., $M_n$); and
wherein the medium (40) for automating the replacement of grinding media is further configured to control the grinding media replacement device (50).

**FIG. 1**

**FIG. 2**

FIG. 3

FIG. 4

(a)

(b)

**FIG. 5**

**FIG. 6**

Europäisches
Patentamt
European
Patent Office
Office européen
des brevets

## EUROPEAN SEARCH REPORT

**Application Number**

EP 25 19 9336

### DOCUMENTS CONSIDERED TO BE RELEVANT

| Category | Citation of document with indication, where appropriate, of relevant passages | Relevant to claim | |
|---|---|---|---|
| A | CN 101 950 171 A (NORTHERN ENG & TECH CORP MCC) 19 January 2011 (2011-01-19) * paragraph [0034]; claims 6,9 * ----- | 1-3,13, 14 | |
| A | CN 115 291 519 A (UNIV CENTRAL SOUTH; CHANGSHA RES INST MINING & METALLURGY CO LTD) 4 November 2022 (2022-11-04) * paragraphs [0011] - [0015], [0056] * ----- | 1,13,14 | |

**CLASSIFICATION OF THE APPLICATION (IPC)**

INV.
B02C17/18
B02C25/00
G06F17/00
G05B13/04

**TECHNICAL FIELDS
SEARCHED (IPC)**

B02C
G06F
G05B

The present search report has been drawn up for all claims

| Place of search | Date of completion of the search | Examiner |
|---|---|---|
| Munich | 21 January 2026 | Iuliano, Emanuela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 9336

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2026

| Patent document cited in search report | | Publication date | Patent family member(s) | Publication date |
|---|---|---|---|---|
| CN 101950171 | A | 19-01-2011 | NONE | |
| CN 115291519 | A | 04-11-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023242752 A1
- CN 112588424 B

- WO 2007110466 A1